# EUROPEAN PATENT APPLICATION

(11) **EP 2 687 344 A1**
(43) Date of publication of application: **22.01.2014**
(21) Application number: 12760333.0
(22) Date of filing: 24.02.2012
(51) Int. Cl.: B26F 1/38, B26D 7/26, B25B 27/00

(54) **HANDLE FOR HANDLING DIES RAPIDLY AND SAFELY**

(30) Priority: 18.03.2011 ES 201130376
(71) Applicant: Comercial Industrial Maquinaria Carton Ondulado, S. L., 08760 Barcelona (ES)
(72) Inventor: SERRA OBIOL, Ramon, E-08760 Barcelona (ES)
(74) Representative: Isern-Jara, Nuria
(86) International application number: PCT/ES2012/070114
(87) International publication number: WO 2012/127083

(57) **Abstract**

The invention relates to a handle for handling dies rapidly and safely, said handle comprising a grip element (8) connected to a locking device (9) by means of a base plate (7), said locking device fixing to a fixing plate that has already been connected to the die (12). The locking device (9) comprises a body, a group formed by a button (1) fixed to a cradle shaft (3), and balls (2) arranged between said shaft and the inside of the body of the locking device, such that, when pressed, the group acts on the balls (2) in such a way that they are hidden inside the locking body, enabling free insertion into the die fixing plate and removal therefrom. In this way, the user can lock the handle to the die and unlock it from the die with only one hand, while firmly holding the grip element.

## Description

### OBJECT OF THE INVENTION

The purpose of the utility model application herein is to register a handle for handling dies rapidly and safely that incorporates significant innovations and advantages.

### BACKGROUND OF THE INVENTION

It is well known that a type of rotary die-cutting machines, such as those used for manufacturing boxes from corrugated cardboard sheets based on passing a corrugated cardboard sheet between two cylinders, comprise a die-holder cylinder in which the die and a counter-die cylinder, provided with covers that are usually made from soft material in sheet form (typically polyurethane), is mounted, wherein the blades for cutting the corrugated cardboard are sunken.

The die-handling operation, due to its weight, volume and surface covered with cutting elements requires a reliable and safe system for transportation and handling in order to prevent accidents.

To solve the aforementioned problem, no known system that fulfils these conditions is known in the current state of the art, being routine practice to handle dies making a number of holes in the actual base thereof, like handles, which are entirely inefficient from the point of view of practicality and above all from a safety perspective.

The purpose of the invention is precisely to provide a system for handling dies easily and safely while being as simple as possible.

### DESCRIPTION OF THE INVENTION

The invention herein has been developed with the aim of providing a handle for handling dies rapidly and safely that resolves the aforementioned drawbacks, further providing other additional advantages that will be apparent from the description detailed hereinafter.

It is therefore an object of this invention to provide a handle characterised in that it comprises a base plate provided with a grip element and a locking device that can be freely rotated or not in relation to the plate. The locking device comprises a button fixed to a cradle shaft which, in its lower position (when it is pressed), hides balls inside the body where they are housed, such that this can be easily inserted into and removed from the fixing plate the die is provided with. By contrast, when the button is not pressed, a spring located inside the body of the locking device holds the button in the upper position, such that the inner shaft cradles push the balls towards the outside of its housing and with the body inserted into the fixing plate, these are inserted into a groove made on the inside of this and very safely, fully secure the handle to the die. In addition, if the part of the body that is inserted into the die fixing plate has a non-circular shape, the rotation of the handle in relation to the die may be blocked.

Thanks to this construction configuration for the handle, the user can lock the handle to the die and unlock it from the die with only one hand, while firmly holding the grip element.

As an additional advantage, it should be noted that to install the fixing plate, only a small open blade-free area is required in the die, such that it can easily be placed in a convenient location.

Other features and advantages of the handle for handling dies rapidly and safely object of the present invention will become obvious from the description of a preferred, though non exclusive, embodiment, which is illustrated by way of a non-limiting example in the attached drawings, wherein:

### BRIEF DESCRIPTION OF THE DRAWINGS

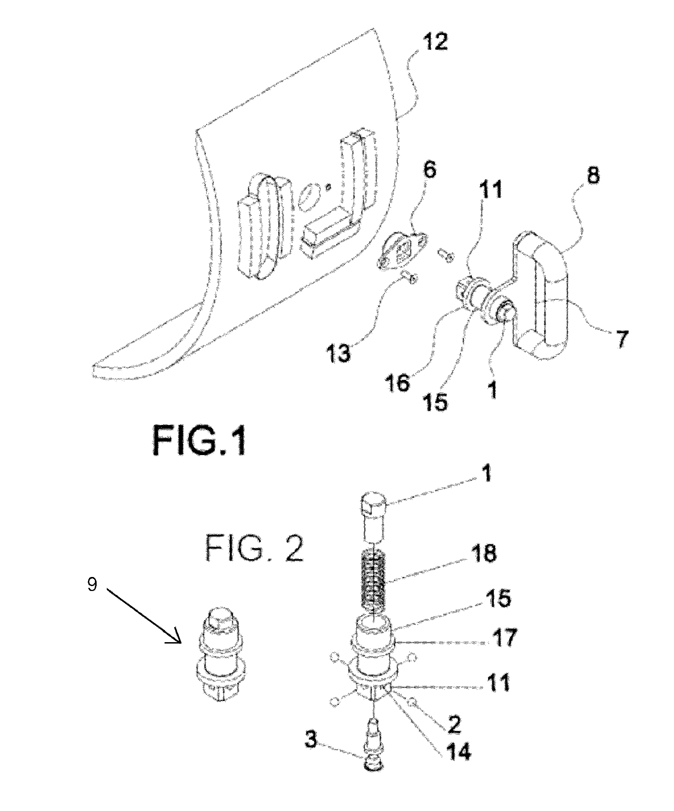

Figure 1.- Perspective view of the handle for handling dies rapidly and safely according to the invention herein in which the die and its die fixing plate attached to the handle are shown;
Figure 2.- Exploded perspective view of the locking device of the handle;

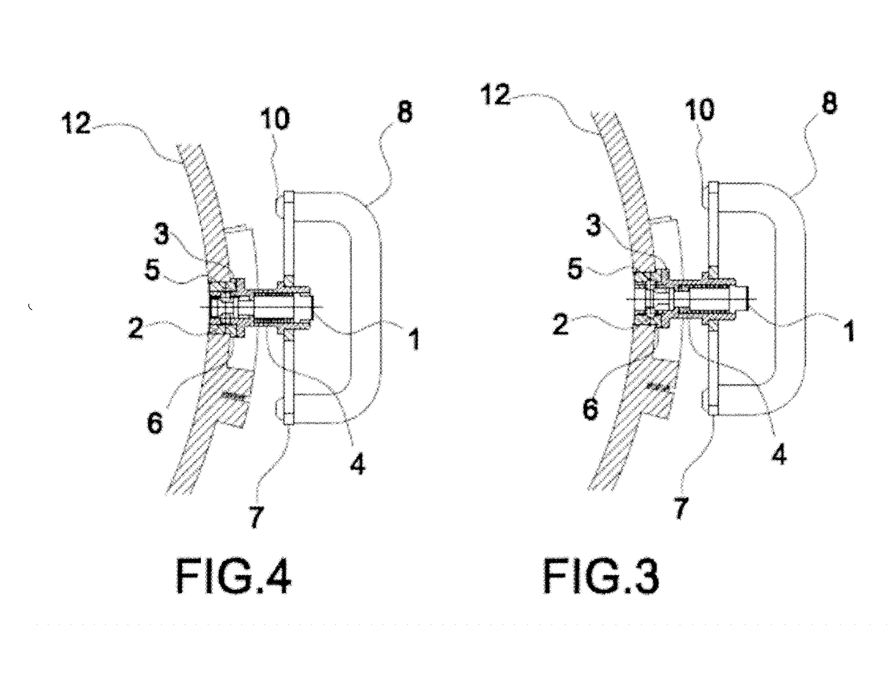

Figure 3.- Close-up longitudinal section view of the handle and the die in a locked position to the die fixing plate, and
Figure 4.- Close-up longitudinal section view of the handle and the die in an unlocked position to the die fixing plate;

### DESCRIPTION OF A PREFERRED EMBODIMENT

According to a preferred embodiment of the invention, the handles comprise a base plate (7) provided with two bores for securing the grip element (8) by means of screws (10) and an additional bore for housing a locking device (9) that can rotate freely or not in relation to the base plate (7).

The body of the locking device generally indicated by reference (9) is formed by a tubular part comprised of a square section (11) additional to a fixing plate (6) fixed to the die (12) to which it is fixed by means of screws (13), having a transverse bore (14) on each of its faces, and a cylindrical section (15), the transition between the two sections having a peripheral ring (16), which, when in a position of use, abuts the fixing plate (6) fixed to the die, and a second peripheral ring (17) located in the cylindrical section (15), at a convenient height, which, when in a position of use, abuts the base plate (7) of the handle.

Thus, the locking device comprises the body of the device described above and a button (1) fixed to a cradle shaft (3) that is maintained on stand-by in an upper position by means of a spring (18) arranged on the inside of the device body, such that when the button (1) is pressed, the cradle shaft (3) hides balls (2) located in the transverse bores (14) of the square tubular section such that this can be easily removed from the fixing plate (6).

In this way, the body (11) can be easily inserted into the die fixing plate (6) and removed therefrom while pressing the button, and by contrast, when the button is not pressed while the body (11) is inserted into the fixing plate (6), the balls (2) are inserted into grooves made on the inside of this (6) and very safely, fully secure the handle to the die.

## Claims

1. A handle for handling dies rapidly and safely, said handle comprising a grip element (9) connected to a locking device (8) by means of a base plate (7), said locking device fixing to a fixing plate that has already been connected to the die (12), **characterised in that** the locking device (9) comprises a body, a group formed by a button (1) fixed to a cradle shaft (3), and balls (2) arranged between said shaft and the inside of the body of the locking device, such that, when pressed, the group acts on the balls (2) in such a way that they are hidden inside the locking body, enabling free insertion into the die fixing plate and removal therefrom.

2. A handle for handling dies rapidly and safely according to claim 1, **characterised in that** the fixing plate (6) has die fixing elements and a tubular section provided with grooves both being additional to the section of the body of the locking device and the balls thereof.

3. A handle for handling dies rapidly and safely according to claim 1, **characterised in that** a spring is arranged between the button and the cradle shaft (3) which, when on stand-by, holds the group in an axially upper position, such that once the locking body is inserted into the die fixing plate, the cradle shaft (3) pushes the balls radially until they protrude from the outer surface of the body blocking the locking system.
